# EUROPEAN PATENT APPLICATION

(11) **EP 2 698 967 A1**
(43) Date of publication of application: **19.02.2014**
(21) Application number: 12876585.6
(22) Date of filing: 25.09.2012
(51) Int. Cl.: H04L 29/08

(54) **SOCIAL NETWORK DATA MINING METHOD FOR TERMINAL USER, AND RELEVANT METHOD, DEVICE AND SYSTEM**

(30) Priority: 18.05.2012 CN 201210156447
(71) Applicant: Huawei Technologies Co., Ltd, Shenzhen, Guangdong 518129 (CN)
(72) Inventor: The designation of the inventor has not yet been filed
(74) Representative: Körber, Martin Hans
(86) International application number: PCT/CN2012/081893
(87) International publication number: WO 2013/170566

(57) **Abstract**

Embodiments of the present invention provide a data mining method for a social network of a terminal user and related methods, apparatuses and systems. A user identifier of a terminal may be acquired, then, in one aspect, a communication record of a user is acquired by using the user identifier, and first social information is obtained according to the user identifier and the communication record; in another aspect, a data packet for accessing, by the user, a social network service is acquired according to the user identifier, and second social information is obtained according to the user identifier and the data packet; in still another aspect, information published by the user on the Internet may be acquired according to the user identifier, and third social information is obtained according to the user identifier and the published information, and finally, a user social database is established or updated by using the first social information, the second social information and the third social information.

## Description

This application claims priority to Chinese Patent Application No. 201210156447.9, filed with the Chinese Patent Office on May 18, 2012 and entitled "DATA MINING METHOD FOR SOCIAL NETWORK OF TERMINAL USER AND RELATED METHODS, APPARATUSES AND SYSTEMS", which is incorporated herein by reference in its entirety.

### FIELD OF THE INVENTION

The present invention relates to the field of communications technologies, and in particular, to a data mining method for a social network of a terminal user and related methods, apparatuses and systems.

### BACKGROUND OF THE INVENTION

With the development of mobile broadband technologies and the Internet, in recent years, the social network service (SNS, Social Network Service) has become a hotspot and one of the trends of the mobile Internet. A variety of commercial services, such as commodity recommendation and precision advertising and marketing, can be carried out by using users' social network information, and such information is also important for security and media industries or sectors.

In the prior art, a user's social network is established or updated generally by importing, by the user himself/herself, social relationship information, for example, an address book or other social network service data. However, the user worries about security and privacy, and is unwilling to upload the phone book or to provide contact information of other social network services in most cases. Moreover, the amount of an operator's own social network service data is very limited. As a result, the social network that can be established has a single scenario.

### SUMMARY OF THE INVENTION

Embodiments of the present invention provide a data mining method for a social network of a terminal user and related methods, apparatuses and systems, which can analyze a user's behaviors of using a terminal and various social network services to self-establish or update a social network.

A data mining method for a social network of a terminal user includes:
acquiring a user identifier of a terminal;
acquiring a communication record of a user according to the user identifier, and obtaining first social information according to the user identifier and the communication record, wherein the first social information comprises the user identifier and first contact information that are in an association relationship;
acquiring, according to the user identifier, a data packet for accessing, by the user, a social network service, and obtaining second social information according to the user identifier and the data packet, wherein the second social information comprises the user identifier and a first user account of a social network service application used by the user to access the social network service and/or second contact information that are in an association relationship;
acquiring, according to the user identifier or the first user account, information published by the user on the Internet, and obtaining third social information according to the user identifier and the published information or according to the first user account and the published information, wherein the third social information comprises the user identifier and a second user account used by the user when publishing the information on the Internet and/or third contact information that are in an association relationship; and
establishing or updating a user social database by using the first social information, the second social information and the third social information.

A data mining apparatus for a social network of a terminal user includes:
a user identifier acquisition unit, configured to acquire a user identifier of a terminal;
a first processing unit, configured to acquire a communication record of a user according to the user identifier, and obtain first social information according to the user identifier and the communication record, wherein the first social information comprises the user identifier and first contact information that are in an association relationship;
a second processing unit, configured to acquire, according to the user identifier, a data packet for accessing, by the user, a social network service, and obtain second social information according to the user identifier and the data packet, wherein the second social information comprises the user identifier and a first user account of a social network service application used by the user to access the social network service and/or second contact information that are in an association relationship;
a third processing unit, configured to acquire, according to the user identifier or the first user account, information published by the user on the Internet, and obtain third social information according to the user identifier and the published information, wherein the third social information comprises the user identifier and a second user account used by the user when publishing the information on the Internet and/or third contact information that are in an association relationship; and
a management unit, configured to establish or update a user social database by using the first social information, the second social information and the third social information.

An advertisement placement method includes:
acquiring a user identifier of a terminal;
acquiring a communication record of a user according to the user identifier, and obtaining first social information according to the user identifier and the communication record, wherein the first social information comprises the user identifier and first contact information that are in an association relationship;
acquiring, according to the user identifier, a data packet for accessing, by the user, a social network service, and obtaining second social information according to the user identifier and the data packet, wherein the second social information comprises the user identifier and a first user account of a social network service application used by the user to access the social network service and/or second contact information that are in an association relationship;
acquiring, according to the user identifier or the first user account, information published by the user on the Internet, and obtaining third social information according to the user identifier and the published information, wherein the third social information comprises the user identifier and a second user account used by the user when publishing the information on the Internet and/or third contact information that are in an association relationship;
establishing or updating a user social database by using the first social information, the second social information and the third social information;
obtaining user social data by querying the user social database, wherein a user identifier of a terminal requesting a social network service is used as a query condition;
obtaining a recommended target user group through user modeling and a preset recommendation algorithm according to the user social data; and
sending advertisement information to the recommended target user group.

An advertisement placement system includes an advertisement placement apparatus and any data mining apparatus for a social network of a terminal user provided in the embodiment of the present invention, where
the advertisement placement apparatus is configured to obtain user social data by querying a user social database wherein a user identifier of a terminal requesting a social network service is used as a query condition; obtain a recommended target user group through user modeling and a preset recommendation algorithm according to the user social data; and send advertisement information to the recommended target user group.

A security supervision method includes:
acquiring a user identifier of a terminal;
acquiring a communication record of a user according to the user identifier, and obtaining first social information according to the user identifier and the communication record, wherein the first social information comprises the user identifier and first contact information that are in an association relationship;
acquiring, according to the user identifier, a data packet for accessing, by the user, a social network service, and obtaining second social information according to the user identifier and the data packet, wherein the second social information comprises the user identifier and a first user account of a social network service application used by the user to access the social network service and/or second contact information that are in an association relationship;
acquiring, according to the user identifier or the first user account, information published by the user on the Internet, and obtaining third social information according to the user identifier and the published information, wherein the third social information comprises the user identifier and a second user account used by the user when publishing the information on the Internet and/or third contact information that are in an association relationship;
establishing or updating a user social database by using the first social information , the second social information and the third social information ;
obtaining user social data by querying the user social database, wherein a user identifier of a terminal requesting a social network service is used as a query condition;
obtaining an identification result by identifying an identity of a user according to the user social data; and
performing redirection processing or hierarchical flow control on an abnormal network behavior of the user by using the identification result.

A security supervision system includes a security supervision apparatus and any data mining apparatus for a social network of a terminal user provided in the embodiment of the present invention, where
the security supervision apparatus is configured to obtain user social data by querying a user social database, wherein a user identifier of a terminal requesting a social network service is used as a query condition; obtain an identification result by identifying an identity of a user according to the user social data; and perform redirection processing or hierarchical flow control on an abnormal network behavior of the user by using the identification result.

A social network analysis system includes:
a user identifier acquisition subsystem, configured to acquire a user identifier of a terminal;
a communication record analysis subsystem, configured to acquire a communication record of a user according to the user identifier, and obtain first social information according to the user identifier and the communication record, wherein the first social information comprises the user identifier and first contact information that are in an association relationship;
an Internet access data analysis subsystem, configured to acquire, according to the user identifier, a data packet for accessing, by the user, a social network service, and obtain second social information according to the user identifier and the data packet, wherein the second social information comprises the user identifier and a first user account of a social network service application used by the user to access the social network service and/or second contact information that are in an association relationship;
an Internet social analysis subsystem, configured to acquire, according to the user identifier or the first user account, information published by the user on the Internet, and obtain third social information according to the user identifier and the published information, wherein the third social information comprises the user identifier and a second user account used by the user when publishing the information on the Internet and/or third contact information that are in an association relationship;
a user social database management subsystem, configured to establish or update a user social database by using the first social information , the second social information and the third social information ; and
a storage subsystem, configured to store the user social database.

A social network system includes an application service system and any user social analysis system provided in the embodiment of the present invention, where
the application service system is configured to provide a third-party social network service based on the user social database.

A communication system includes an operator telecommunication network system, a social network service providing system and any social network system provided in the embodiment of the present invention, where
the operator telecommunication network system is configured to parse an Internet access record of a terminal to obtain a user identifier of the terminal, and provide the user identifier of the terminal and a communication record of a user for the social network system; and
the social network service providing system is configured to provide, for the social network system, a data packet for accessing a social network service and information published by the user on the Internet.

According to the embodiments of the present invention, a user identifier of a terminal is acquired, then, in one aspect, a communication record of a user is acquired by using the user identifier, and first social information is obtained according to the user identifier and the communication record; in another aspect, a data packet for accessing, by the user, a social network service is acquired according to the user identifier, and second social information is obtained according to the user identifier and the data packet; in still another aspect, information published by the user on the Internet may be acquired according to the user identifier, and third social information is obtained according to the user identifier and the published information, and finally, a user social database is established or updated by using the first social information, the second social information and the third social information, so as to form a multifaceted social network. Compared with the prior art in which only a social network with a single scenario can be established based on an operator's own social network service data, the social network established according to this solution has richer scenarios and more detailed content. That is, according to this solution, a user's behaviors of using a terminal and various social network services can be analyzed to self-establish a social network with comprehensive information, which helps to improve the efficiency of various services that need to be operated based on the social network. For example, if the social network is applied to advertisement placement, the precision of the advertisement placement can be improved; for another example, if the social network is applied to network supervision, it helps to identify the identity of a user and supervise network behaviors, and so on.

### BRIEF DESCRIPTION OF THE DRAWINGS

To illustrate the technical solutions in the embodiments of the present invention more clearly, the following briefly describes the accompanying drawings needed for describing the embodiments of the present invention. Apparently, the accompanying drawings in the following description merely show some embodiments of the present invention, and persons skilled in the art may derive other drawings from these accompanying drawings without creative efforts.
FIG. 1 is a flowchart of a data mining method for a social network of a terminal user provided in an embodiment of the present invention;
FIG. 2a is another flowchart of a data mining method for a social network of a terminal user provided in an embodiment of the present invention;
FIG. 2b is an example relationship diagram of second social information;
FIG. 3 is a schematic structural diagram of a data mining apparatus for a social network of a terminal user provided in an embodiment of the present invention;
FIG. 4a is a flowchart of an advertisement placement method provided in an embodiment of the present invention;
FIG. 4b is a schematic structural diagram of an advertisement placement system provided in an embodiment of the present invention;
FIG. 5a is a flowchart of a security supervision method provided in an embodiment of the present invention;
FIG. 5b is a schematic structural diagram of a security supervision system provided in an embodiment of the present invention;
FIG. 6 is a schematic scenario diagram of a social network analysis system provided in an embodiment of the present invention;
FIG. 7 is a schematic structural diagram of a social network analysis system provided in an embodiment of the present invention;
FIG. 8 is a schematic structural diagram of a social network system provided in an embodiment of the present invention; and
FIG. 9 is a schematic structural diagram of a communication system provided in an embodiment of the present invention.

### DETAILED DESCRIPTION OF THE EMBODIMENTS

The following clearly describes the technical solutions according to the embodiments of the present invention with reference to the accompanying drawings in the embodiments of the present invention. Apparently, the embodiments in the following description are merely a part rather than all of the embodiments of the present invention. All other embodiments obtained by persons skilled in the art based on the embodiments of the present invention without creative efforts shall fall within the protection scope of the present invention.

The embodiments of the present invention provide a data mining method for a social network of a terminal user and related methods, apparatuses and systems. Detailed descriptions are given below respectively.

### Embodiment 1

The embodiment of the present invention is to be described in terms of a data mining apparatus for a social network of a terminal user.

A data mining method for a social network of a terminal user includes: acquiring a user identifier of a terminal; acquiring a communication record of a user according to the user identifier, and obtaining first social information according to the user identifier and the communication record, where the first social information includes the user identifier and first contact information that are in an association relationship; acquiring, according to the user identifier, a data packet for accessing, by the user, a social network service, and obtaining second social information according to the user identifier and the data packet, where the second social information includes the user identifier and a first user account of the SNS application and/or second contact information that are in an association relationship; acquiring, according to the user identifier or the first user account, information published by the user on the Internet, and obtaining third social information according to the user identifier and the published information, where the third social information includes the user identifier and a second user account used by the user when publishing the information on the Internet and/or third contact information that are in an association relationship; and establishing or updating a user social database, referred to as a social network for short, by using the first social information, the second social information and the third social information.

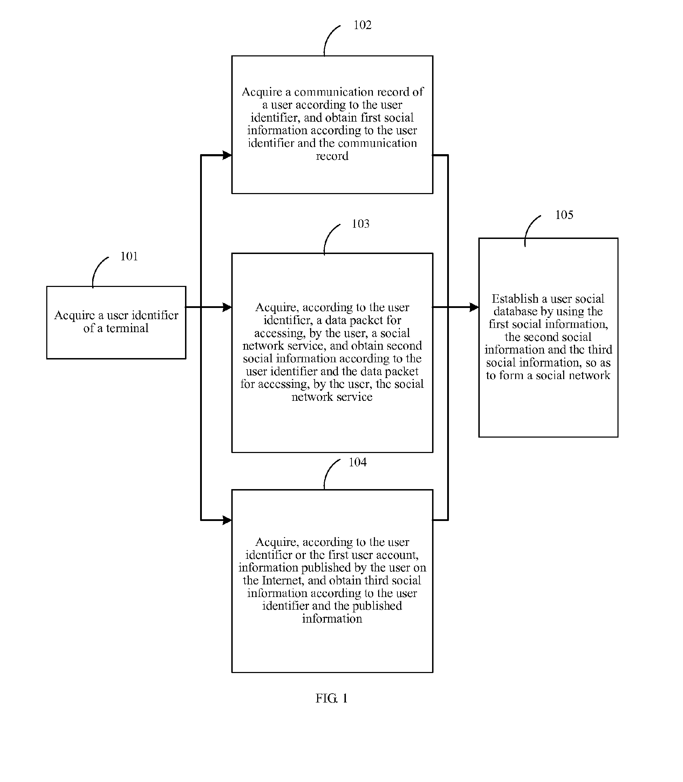

Referring to FIG. 1, the specific process may be as follows:
101: Acquire a user identifier of a terminal, where the terminal may be specifically a terminal device that can intervene in an operator network, such as a cell phone, a tablet computer, or a notebook computer, and the user identifier may be specifically an identifier that can identify the identity of the user, such as a cell phone number, a wireless service number using a 3G Internet access card or a fixed number of fixed broadband.
102: Acquire a communication record of a user according to the user identifier obtained in step 101, and obtain corresponding social information according to the user identifier and the communication record, where the corresponding social information is referred to as first social information in the embodiment of the present invention. For example, this step may be specifically as follows:
   (1) Acquire, from a charging system according to the user identifier, a communication record of a user, which, for example, may be specifically a record of a cell phone communication service such as calls, short messages or multimedia messages.
   (2) Acquire contact information according to the communication record.

It should be noted that, for ease of description, in the embodiment of the present invention, the contact information acquired according to the communication record is referred to as first contact information, where the content of the first contact information may be specifically set according to actual application requirements, for example, information such as a cell phone number or a short number of a contact; in addition, the content may also include other information such as name, gender, place of work, home address and/or hobbies of the contact.

(3) Associate the first contact information with the user identifier to obtain first social information.

For example, that the user identifier is specifically a cell phone number and the communication record is specifically a call record of the cell phone is taken as an example, where specifically, a cell phone bill of the user may be acquired from a charging system according to the cell phone number, various contact information is extracted from the cell phone bill, where the various contact information is referred to as first contact information in the embodiment of the present invention, and then the first contact information is associated with the cell phone number of the user, so as to obtain an association relationship between the cell phone user and other cell phone users, that is, the association relationship between the cell phone user and other cell phone users is referred to as the first social information in the embodiment of the present invention.

103: Acquire, according to the user identifier, a data packet for accessing, by the user, a social network service, and obtain corresponding social information according to the user identifier and the data packet for accessing, by the user, the social network service, where the corresponding social information is referred to as second social information in the embodiment of the present invention. For example, this step may be specifically as follows:
(1) Acquire, from a gateway general packet radio service support node (GGSN, Gateway General Packet Radio Service Support Node) or a service control gateway (SCG, Service Control Gateway) according to the user identifier, a data packet for accessing, by the user, a social network service.
(2) Parse, through deep packet inspection (DIP, Deep Packet Inspection) and/or user behavior analysis (UBA, User Behavior Analysis), the data packet for accessing, by the user, the social network service, to extract a user account and/or contact information.

For ease of description, in the embodiment of the present invention, the user account extracted by parsing the data packet through deep packet inspection and/or user behavior analysis is referred to as a first user account, and the contact information extracted by parsing the data packet through deep packet inspection and/or user behavior analysis is referred to as second contact information.

The content of the first user account and the second contact information may be specifically set according to actual application requirements. For example, the first user account may be specifically a login identifier such as a user's mailbox, a user's nickname or a user's QQ number; and the second contact information may be specifically information such as a cell phone number or a short number of a contact, and in addition, the second contact information may also include other information such as name, gender, place of work, home address and/or hobbies of the contact.

(3) Associate the first user account and/or the second contact information with the user identifier to obtain second social information.

For example, that the user identifier is specifically a cell phone number and the social network service is specifically microblog is taken as an example, where this step may be specifically as follows:
(a) acquire, from a GGSN or an SCG or a Broadband Remote Access Server (BRAS) according to the cell phone number, a data packer for accessing, by the user, microblog service, extract, from the data packet for accessing, by the user, the microblog service, user accounts of other users relevant to the microblog service, for example, user accounts of microblog users followed by the user, and/or user accounts of other microblog users following the user and so on, where the user accounts of other users relevant to the microblog service are referred to as first user accounts in the embodiment of the present invention, and then associate the first user accounts with the cell phone number of the user to obtain an association relationship between the cell phone user and other microblog users, where the association relationship between the cell phone user and other microblog users is referred to as the second social information in the embodiment of the present invention; or
(b) acquire, from the GGSN or SCG or BRAS according to the cell phone number, a data packer for accessing, by the user, microblog service, extract, from the data packet for accessing, by the user, the microblog service, various contact information relevant thereto, for example, contact information of microblog users followed by the user, and/or contact information of other microblog users following the user, where the various contact information relevant thereto is referred to as second contact information in the embodiment of the present invention, and then associate the second contact information with the cell phone number of the user to obtain an association relationship between the cell phone user and other microblog users, where the association relationship between the cell phone user and other microblog users is referred to as the second social information in the embodiment of the present invention; or
(c) acquire, from the GGSN or SCG or BRAS according to the cell phone number, a data packer for accessing, by the user, microblog service, extract, from the data packet for accessing, by the user, microblog service, user accounts of other users and various contact information relevant to the microblog, where the user accounts of other users and various contact information relevant to the microblog are referred to as first user accounts and second contact information respectively, and then associate the first user accounts, the second contact information and the cell phone number of the user to obtain an association relationship between the cell phone user and other microblog users, where the association relationship between the cell phone user and other microblog users is referred to as the second social information in the embodiment of the present invention.

Similarly, the foregoing manner may also be adopted for other social network services to form corresponding social information. It should be noted that, the second social information in the embodiment of the present invention may specifically include social information formed by a single social network service application, and may also include social information formed by multiple social network service applications, for example, may specifically include social information obtained based on the QQ application, and/or social information obtained based on microblog of a certain website, and/or social information obtained based on a certain social network, and so on.

104: Acquire, according to the user identifier or the first user account obtained in step 102, information published by the user on the Internet, and obtain corresponding social information, according to the user identifier/the first user account and the published information, where the corresponding social information is referred to as third social information in the embodiment of the present invention. For example, this step may be specifically as follows:
(1) Acquire, according to the user identifier, information published by the user on the Internet; or acquire, according to the first user account, information published by the user on the Internet.

For example, the information published by the user on the Internet may be specifically acquired according to the user identifier or the first user account through a social network service accessed by the user.

(2) Parse the published information through deep packet inspection and/or user behavior analysis, to extract a second user account and/or third contact information.

The content of the second user account and the third contact information may be specifically set according to actual application requirements. For example, the second user account may be specifically a login identifier such as a user's mailbox, a user's nickname or a user's QQ number; and the third contact information may be specifically information such as a cell phone number or a short number of a contact, and in addition, the third contact information may also include other information such as name, gender, place of work, home address and/or hobbies of the contact.

(3) Associate the second user account and/or the third contact information with the user identifier to obtain third social information.

For example, through texts and pictures published by a user on a microblog website, comments relevant to the texts and pictures are acquired, the comments are analyzed through deep packet inspection and/or user behavior analysis, to determine the relationship between a comment maker and the user, for example, whether the comment maker is an ordinary visitor or a friend, thereby obtaining a corresponding user account and/or contact information, that is, obtaining a second user account and/or third contact information, and the "second user account and/or third contact information" is associated with the user identifier to obtain third social information.

It should be noted that, the first user account refers to a user account obtained by parsing a data packet for accessing, by the user, a social network service, the second user account refers to a user account obtained by parsing information published by the user on the Internet, and the first user account and the second user account may be the same or different.

105: Establish or update a user social database by using the first social information obtained in step 102, the second social information obtained in step 103 and the third social information obtained in step 104. For example, this step may be specifically as follows:

Integrate, the first contact information in the first social information, the first user account and/or the second contact information in the second social information, and the second user account and/or the third contact information in the third social information by using the user identifier as an index, to obtain the user social database.

In view of the above, according to this embodiment, a user identifier of a terminal is acquired, then, in one aspect, a communication record of a user is acquired by using the user identifier, and first social information is obtained according to the user identifier and the communication record; in another aspect, a data packet for accessing, by the user, a social network service is acquired according to the user identifier, and second social information is obtained according to the user identifier and the data packet; in still another aspect, information published by the user on the Internet may be acquired according to the user identifier, and third social information is obtained according to the user identifier and the published information, and finally, a user social database is established or updated by using the first social information, the second social information and the third social information, so as to form a multifaceted social network. Compared with the prior art in which only a social network with a single scenario can be established based on an operator's own social network service data, the social network established according to this solution has richer scenarios and more comprehensive, detailed and precise content.

### Embodiment 2

According to the method described in the embodiment, further detailed description is to be given below by examples.

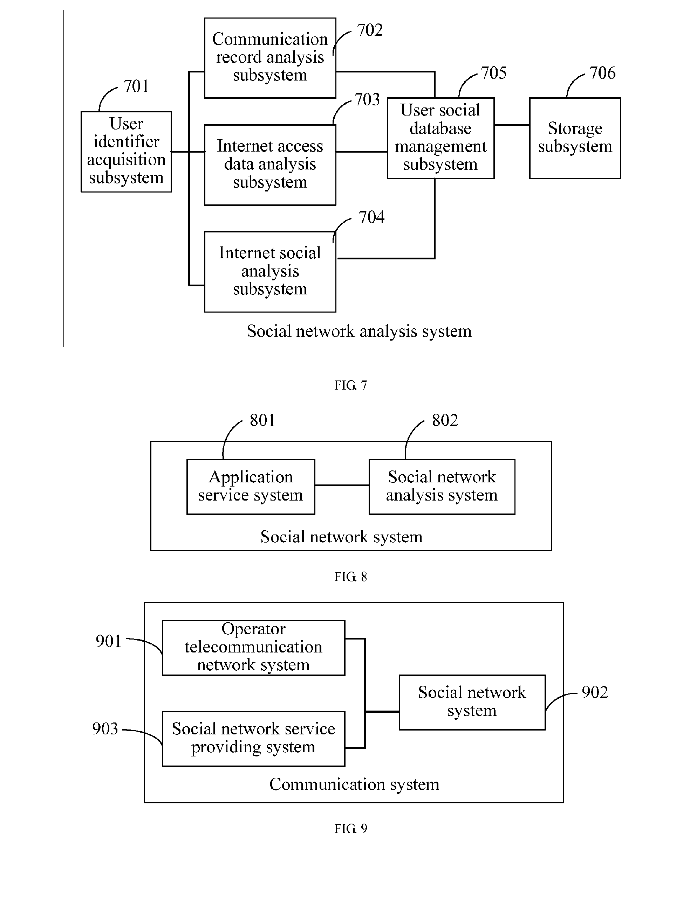

Referring to FIG. 7, FIG. 7 is a schematic diagram of a social network analysis system. The social network analysis system includes a storage subsystem configured to store a user social database, a user identifier acquisition subsystem, a communication record analysis subsystem, an Internet access data analysis subsystem, an Internet social analysis subsystem and a user social database management subsystem, which are specifically as follows:

### (1) User identifier acquisition subsystem

The user identifier acquisition subsystem is mainly configured to acquire a user identifier of a terminal, where the terminal may be specifically a terminal device that can intervene in an operator network, such as a cell phone, a tablet computer, or a notebook computer, and the user identifier may be specifically an identifier that can identify the identity of the user, such as a cell phone number, a wireless service number using a 3G Internet access card or a fixed number of fixed broadband.

### (2) Communication record analysis subsystem

The communication record analysis subsystem is mainly configured to analyze a communication record, for example, a record of a cell phone communication service such as calls, short messages or multimedia messages, of a user according to the user identifier of the terminal, for example, a cell phone number, to acquire first contact information, and then associate the first contact information with the user identifier (for example, the cell phone number) to obtain first social information.

### (3) Internet access data analysis subsystem

The Internet access data analysis subsystem is mainly configured to identify, through a user's Internet access uniform/universal resource locator (URL, Uniform/Universal Resource Locator) according to the user identifier of the terminal, for example, a cell phone number, a social network service accessed by the user, acquire, from the GGSN or SCG or BRAS, a data packet for accessing, by the user, the social network service, parse the acquired data packet through deep packet inspection or user behavior analysis, to extract a first user account and/or second contact information, and then associate the "first user account and/or second contact information" with the user identifier (for example, the cell phone number) to obtain second social information.

### (4) Internet social analysis subsystem

The Internet social analysis subsystem is mainly configured to acquire, according to the user identifier of the terminal, information published by the user on the Internet, for example, track, through an acquired social network service account of the user, information published by the user through channels such as personal space and blog on the Internet, then parse the published information through deep packet inspection and/or user behavior analysis, to extract a second user account and/or third contact information, and associate the "second user account and/or third contact information" with the user identifier to obtain third social information.

### (5) User social database management subsystem

The user social database management subsystem is mainly configured to integrate, by using the user identifier of the terminal as an index, the first contact information in the first social information obtained by the communication record analysis subsystem, the first user account and/or the second contact information in the second social information obtained by the Internet access data analysis subsystem, and the second user account and/or the third contact information in the third social information obtained by the Internet social analysis subsystem, to obtain the user social database.

The storage subsystem configured to store the user social database may be integrated in a device to which other subsystems belong, for example, a device to which the user social database management subsystem belongs, and may also be independent of the device to which other subsystems belong, for example, located in another storage device, and so on.

It should be noted that, the Internet access data analysis subsystem and the Internet social analysis subsystem may be integrated to serve as a social network service analysis subsystem, that is, the second social information obtained by the Internet access data analysis subsystem and the third social information obtained by the Internet social analysis subsystem are combined to construct social network service social networks of the user. Further, the constructed social network service social networks may be classified according to a list of social network services the user is interested in. For example, if the social network services the user is interested in include QQ and microblog, a QQ social network and a microblog social network may be established respectively, and so on.

Based on the data mining apparatus for a social network of a terminal user and the user social database, a data mining method for a social network of a terminal user is to be described in detail below by taking that the terminal is specifically a cell phone and the user identifier is specifically a cell phone number as an example.

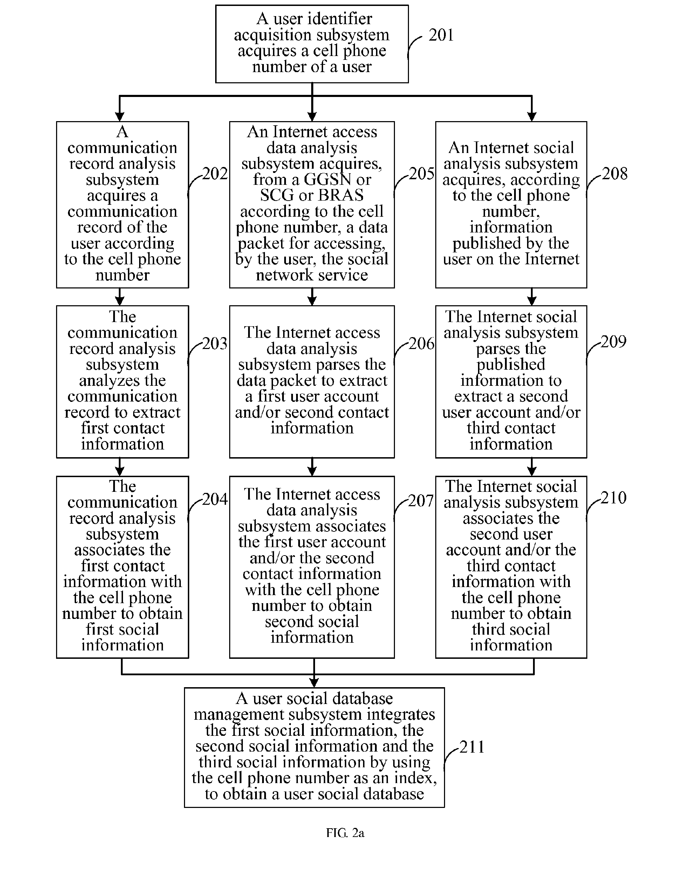

As shown in FIG. 2a, the specific process may be as follows:
201: A user identifier acquisition subsystem acquires a cell phone number of a user, and then step 202, step 205 and step 208 are performed respectively.
202: A communication record analysis subsystem acquires, from a charging system according to the cell phone number acquired in step 201, a communication record of the user, which, for example, may be specifically a record of a cell phone communication service such as calls, short messages or multimedia messages, and then step 203 is performed.
203: The communication record analysis subsystem analyzes the communication record acquired in step 202, to extract first contact information, for example, extract information such as a cell phone number or a short number of a contact having communication with the user, where the communication includes voice calls, short messages and/or multimedia messages, and then step 204 is performed.

In addition, the first contact information may also include other information such as name, gender and/or hobbies of the contact.

204: The communication record analysis subsystem associates the first contact information extracted in step 203 with the cell phone number to obtain an association relationship between the cell phone user and other cell phone users, that is, to obtain the first social information referred to in the embodiment of the present invention, and then step 211 is performed.

Specifically, some association algorithms may be used to associate the first contact information with the cell phone number to acquire the first social information. Reference may be made to the prior art for details of the association algorithms, which are not repeated here.

205: An Internet access data analysis subsystem identifies, through the user's Internet access URL according to the cell phone number acquired in step 201, a social network service accessed by the user, and acquires, from a GGSN or SCG or BRAS, a data packet for accessing, by the user, the social network service, and then step 206 is performed.

206: The Internet access data analysis subsystem parses, through deep packet inspection and/or user behavior analysis, the data packet acquired in step 205 to extract a first user account and/or second contact information, and then step 207 is performed.

The first user account may be specifically a login identifier such as a user's mailbox, a user's nickname or a user's QQ number; and the second contact information may be specifically information such as a cell phone number or a short number of a contact, and in addition, may also include other information such as name, gender and/or hobbies of the contact.

207: The Internet access data analysis subsystem associates the first user account and/or the second contact information acquired in step 206 with the cell phone number acquired in step 201, to obtain second social information, and then step 211 is performed. For example, this step may be specifically as follows:

The Internet access data analysis subsystem associates the first user account with the cell phone number acquired in step 201, to obtain the second social information; or
the Internet access data analysis subsystem associates the second contact information with the cell phone number acquired in step 201, to obtain the second social information; or
the Internet access data analysis subsystem associates the first user account, the second contact information and the cell phone number acquired in step 201, to obtain the second social information.

It should be noted that, the second social information may specifically include social information formed by a single social network service, and may also include social information formed by multiple social network services, for example, may specifically include social information obtained based on the QQ application, and/or social information obtained based on microblog of a certain website, and/or social information obtained based on a certain social network, and so on.

208: An Internet social analysis subsystem acquires, according to the cell phone number acquired in step 201, information published by the user on the Internet, for example, acquires friend information of the user, and then step 209 is performed.

For example, a social network service accessed by the user, for example, applications such as personal space, blog or microblog service accessed by the user, may be identified through the user's Internet access URL according to the cell phone number of the user, and then information published by the user in the social network services, such as friend information made public on the applications, blog articles published by the user, or comments and messages left by visitors, is acquired.

It should be noted that, if the user performs the social network service based on the first user account, the Internet social analysis subsystem may also acquire, according to the first user account extracted in step 206, information published by the user on the Internet, for example, acquire friend information of the user, and then step 209 is performed, which is not repeated here.

209: The Internet social analysis subsystem parses the published information acquired in step 208 through deep packet inspection and/or user behavior analysis, to extract a second user account and/or third contact information.

For example, information of a contact interacting with the user may be acquired through deep packet inspection and/or user behavior analysis according to content made public by the user in the application such as personal space, blog or microblog. For example, the contact information is acquired from page content such as comments, messages or a friend bar through text extraction and analysis. For example, by analyzing the text of comments on the blog, the relationship between the comment maker and the blogger, that is, whether the comment maker is an ordinary visitor or a friend of the blogger, can be determined. Reference may be made to the prior art for details of the technology of text extraction and analysis, which is not repeated here.

210: The Internet social analysis subsystem associates the second user account and/or the third contact information obtained in step 209 with the cell phone number acquired in step 201, to obtain third social information, and then step 211 is performed. For example, this step may be specifically as follows:

The Internet social analysis subsystem associates the second user account with the cell phone number acquired in step 201, to obtain the third social information; or
the Internet social analysis subsystem associates the third contact information with the cell phone number acquired in step 201, to obtain the third social information; or
the Internet social analysis subsystem associates the second user account and the third contact information with the cell phone number acquired in step 201, to obtain the third social information.

It should be noted that, the third social information may specifically include social information formed by information published on a single social network service, and may also include social information formed by information published on multiple social network services, for example, may specifically include social information obtained based on information published on the QQ application, and/or social information obtained based on information published on microblog of a certain website, and/or social information obtained based on information published on a certain social network, and so on.

211: A user social database management subsystem integrates, by using the cell phone number acquired in step 201 as an index, the first contact information in the first social information obtained by the communication record analysis subsystem, the first user account and/or the second contact information in the second social information obtained by the Internet access data analysis subsystem, and the second user account and/or the third contact information in the third social information obtained by the Internet social analysis subsystem, to obtain a user social database. In this way, in actual application scenarios, all related social information of the user can be queried in the user social database by using the cell phone number as an index.

During the integration, specifically, the first contact information in the first social information, the first user account and/or the second contact information in the second social information, and the second user account and/or the third contact information in the third social information may be combined directly, and the first contact information in the first social information, the first user account and/or the second contact information in the second social information, and the second user account and/or the third contact information in the third social information may also be combined according to a preset algorithm.

The preset algorithm may be set according to actual application requirements. For example, specifically, the number of occurrences of a user as a contact in different social network service applications may be used as a weight value to perform weighted calculation on user relationship intimacy.

It should be noted that, in addition to that the cell phone number is used as an index value, other social information may also be used as the index value, for example, the user's mailbox, account or nickname is used as the index value, which is not repeated here.

For example, the cell phone number of the user is "13811111111", in this case, the user identifier acquisition subsystem acquires the cell phone number "13811111111", and then acquires, from a charging system, a communication record of the user whose cell phone number is "13811111111". For example, if the user made calls with users of "13800000001", "13800000002" and "13800000003", the user identifier acquisition subsystem associates the users whose cell phone numbers are "13800000001", "13800000002" and "13800000003" respectively with the user whose cell phone number is "13811111111", to obtain first social network information.

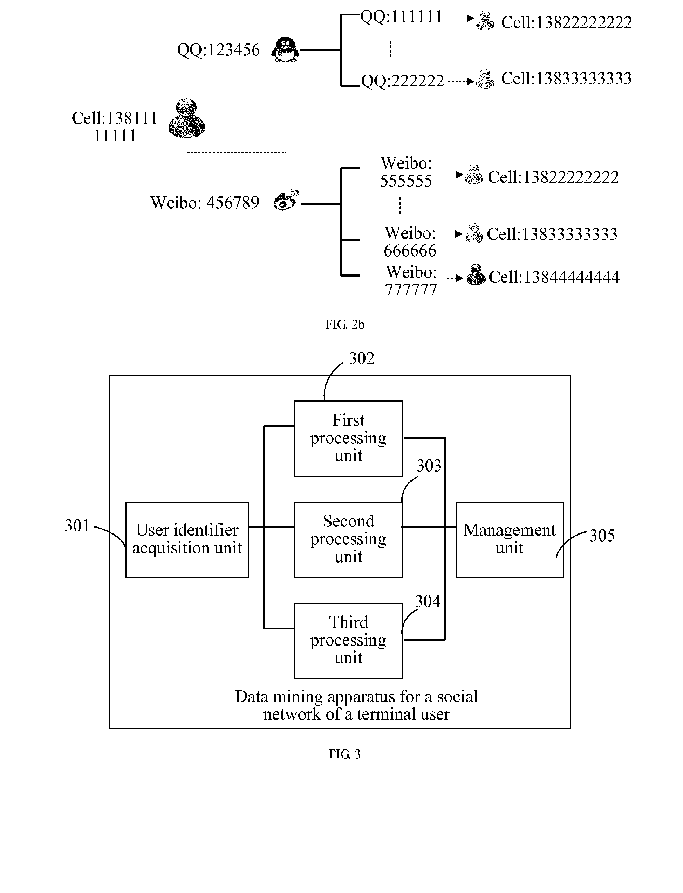

For another example, if the social network services that the user whose cell phone number is "13811111111" participates in include QQ and microblog (such as Weibo.com), where the QQ number is "123456" and the Weibo number is "456789", the Internet access data analysis subsystem acquires friends of the QQ number, namely, the user whose QQ number is "111111" and the user whose QQ number is "222222", through the QQ number "123456", where the cell phone number of the QQ number "111111" is "13822222222", and the cell phone number of the user whose QQ number is "222222" is "13833333333", and then the QQ numbers and cell phone numbers of the QQ friends are associated with the cell phone number "13811111111" respectively, with reference to FIG. 2b. Similarly, related Weibo numbers, which are respectively "555555", "666666" and "777777", can be acquired through the Weibo number "456789", where the cell phone number of the user whose Weibo number is "555555" is "13822222222", the cell phone number of the user whose Weibo number is "666666" is "13833333333", and the cell phone number of the user whose Weibo number is "777777" is "13844444444", and then the Weibo numbers and the cell phone numbers are associated with "13811111111" respectively, with reference to FIG. 2b. The "cell" in FIG. 2b indicates the cell phone number.

The formation of the third social information is similar to that of the second social information, which is not illustrated here by examples.

In view of the above, according to this embodiment, a cell phone number of a user is acquired, then, in one aspect, a communication record of the user is acquired by using the user identifier, and first social information is obtained according to the cell phone number and the communication record; in another aspect, a data packet for accessing, by the user, a social network service is acquired according to the cell phone number, and second social information is obtained according to the cell phone number and the data packet; in still another aspect, information published by the user on the Internet may be acquired according to the cell phone number, and third social information is obtained according to the cell phone number and the published information, and finally, a user social database is established or updated by using the first social information, the second social information and the third social information, so as to form a multifaceted social network. Compared with the prior art in which only a social network with a single scenario can be established based on an operator's own social network service data, the social network established according to this solution has richer scenarios and more comprehensive, detailed and precise content.

### Embodiment 3

Correspondingly, the embodiment of the present invention further provides a data mining apparatus for a social network of a terminal user. As shown in FIG. 3, the data mining apparatus for a social network of a terminal user includes a user identifier acquisition unit 301, a first processing unit 302, a second processing unit 303, a third processing unit 304 and a management unit 305.

The user identifier acquisition unit 301 is configured to acquire a user identifier of a terminal, where the terminal may be specifically a terminal device that can intervene in an operator network, such as a cell phone, a tablet computer, or a notebook computer, and the user identifier may be specifically an identifier that can identify the identity of the user, such as a cell phone number, a wireless service number using a 3G Internet access card or a fixed number of fixed broadband.

The first processing unit 302 is configured to acquire a communication record of a user according to the user identifier acquired by the user identifier acquisition unit 301, and obtain first social information according to the user identifier and the communication record, where the first social information includes the user identifier and first contact information that are in an association relationship.

The second processing unit 303 is configured to acquire, according to the user identifier acquired by the user identifier acquisition unit 301, a data packet for accessing, by the user, a social network service, and obtain second social information according to the user identifier and the data packet, where the second social information includes the user identifier and a first user account of the SNS application and/or second contact information that are in an association relationship.

The third processing unit 304 is configured to acquire, according to the user identifier acquired by the user identifier acquisition unit 301 or the first user account, information published by the user on the Internet, and obtain third social information according to the user identifier and the published information, where the third social information includes the user identifier and a second user account used by the user when publishing the information on the Internet and/or third contact information that are in an association relationship.

The management unit 305 is configured to establish or update a user social database by using the first social information, the second social information and the third social information that are obtained.

The first processing unit 302 may include a first acquisition subunit and a first association subunit.

The first acquisition subunit is configured to acquire, from a charging system, the communication record of the user according to the user identifier acquired by the user identifier acquisition unit 301, and acquire the first contact information of the user according to the communication record, where the communication record may be specifically a record of a cell phone communication service such as calls, short messages or multimedia messages.

The first association subunit is configured to associate the first contact information acquired by the first acquisition subunit with the user identifier acquired by the user identifier acquisition unit 301, to obtain the first social information.

The second processing unit 303 may include a second acquisition subunit and a second association subunit.

The second acquisition subunit is configured to acquire, from a GGSN or SCG according to the user identifier acquired by the user identifier acquisition unit 301, the data packet for accessing, by the user, the social network service; and parse the data packet through deep packet inspection and/or user behavior analysis, to extract the first user account of a social network service application used by the user to access the social network service and/or the second contact information of the user.

The first user account may be specifically a login identifier such as a user's mailbox, a user's nickname or a user's QQ number; and the second contact information may be specifically information such as a cell phone number or a short number of a contact, and in addition, may also include other information such as name, gender and/or hobbies of the contact.

The second association subunit is configured to associate the first user account and/or the second contact information acquired by the second acquisition subunit with the user identifier acquired by the user identifier acquisition unit 301, to obtain the second social information, that is, associate the first user account with the user identifier acquired by the user identifier acquisition unit 301, or, associate the second contact information with the user identifier acquired by the user identifier acquisition unit 301, or, associate the first user account, the second contact information and the user identifier acquired by the user identifier acquisition unit 301.

The third processing unit 304 may include a third acquisition subunit and a third association subunit.

The third acquisition subunit is configured to acquire, according to the user identifier acquired by the user identifier acquisition unit 301 or the first user account, the information published by the user on the Internet; and parse the published information through deep packet inspection and/or user behavior analysis, to extract the second user account used by the user when publishing the information on the Internet and/or the third contact information of the user.

The second user account may be specifically a login identifier such as a user's mailbox, a user's nickname or a user's QQ number; and the third contact information may be specifically information such as a cell phone number or a short number of a contact, and in addition, may also include other information such as name, gender and/or hobbies of the contact.

The third association subunit is configured to associate the second user account and/or the third contact information acquired by the third acquisition subunit with the user identifier, to obtain the third social information.

Then, the management unit 305 is specifically configured to integrate the first contact information in the first social information, the first user account and/or the second contact information in the second social information, and the second user account and/or the third contact information in the third social information by using the user identifier as an index, to obtain the user social database.

In addition to that the user social database can be stored by the management unit 305 directly, the user social database can also be stored separately, that is
the data mining apparatus for a social network of a terminal user may also include a storage unit, configured to store the user social database obtained by the management unit 305.

During specific implementation, the foregoing units may be implemented as independent entities, and may also be implemented as the same entity or several entities in any combination thereof. For example, the user identifier acquisition unit 301 may be implemented as the user identifier acquisition subsystem in Embodiment 2, the first processing unit 302 may be implemented as the communication record analysis subsystem in Embodiment 2, the second processing unit 303 may be implemented as the Internet access data analysis subsystem in Embodiment 2, the third processing unit 304 may be implemented as the Internet social analysis subsystem in Embodiment 2, and the management unit 305 may be implemented as the user social database management subsystem in Embodiment 2. Certainly, other implementation manners may also exist, which are not repeated here. Reference may be to the foregoing method embodiments for specific implementation of the units, which is not repeated here.

In view of the above, in the data mining apparatus for a social network of a terminal user in this embodiment, the user identifier acquisition unit may acquire a user identifier of a terminal, then the first processing unit 302 acquires a communication record of a user by using the user identifier, and obtains first social information according to the user identifier and the communication record; the second processing unit 303 acquires, according to the user identifier, a data packet for accessing, by the user, a social network service, and obtains second social information according to the user identifier and the data packet; the third processing unit 304 acquires, according to the user identifier, information published by the user on the Internet, and obtains third social information according to the user identifier and the published information, and then the management unit 305 establishes or updates a user social database by using the first social information, the second social information and the third social information, so as to form a multifaceted social network. Compared with the prior art in which only a social network with a single scenario can be established based on an operator's own social network service data, the social network established according to this solution has richer scenarios and more comprehensive, detailed and precise content.

The "user social database" established in the embodiment of the present invention may also exist as a single service, for invocation by multiple upper-level services through an application programming interface (API, Application Programming Interface) or a database query interface, and the entire data mining apparatus for a social network of a terminal user may be embedded in networking to provide services for different services, such as a precision advertisement placement service, an application/content recommendation service, and a network security management/monitoring service. Applications of the social network are described below by taking two scenarios including precision advertising and network supervision as an example.

### Embodiment 4

The "user social database" established in the embodiment of the present invention may be specifically applied to the scenario of precision advertisement placement (referred to as advertisement placement for short below). The details are as follows:

An advertisement placement method includes: acquiring a user identifier of a terminal; acquiring a communication record of a user according to the user identifier, and obtaining first social information according to the user identifier and the communication record, where the first social information includes the user identifier and first contact information that are in an association relationship; acquiring, according to the user identifier, a data packet for accessing, by the user, a social network service, and obtaining second social information according to the user identifier and the data packet, where the second social information includes the user identifier and a first user account of the SNS application and/or second contact information that are in an association relationship; acquiring, according to the user identifier or the first user account, information published by the user on the Internet, and obtaining third social information according to the user identifier and the published information, where the third social information includes the user identifier and a second user account used by the user when publishing the information on the Internet and/or third contact information that are in an association relationship; establishing or updating a user social database by using the first social information, the second social information and the third social information; querying the user social database by using a user identifier of a terminal requesting a social network service as a query condition, so as to obtain user social data; obtaining a recommended target user group through user modeling and a preset recommendation algorithm according to the acquired user social data; and sending advertisement information to the obtained recommended target user group.

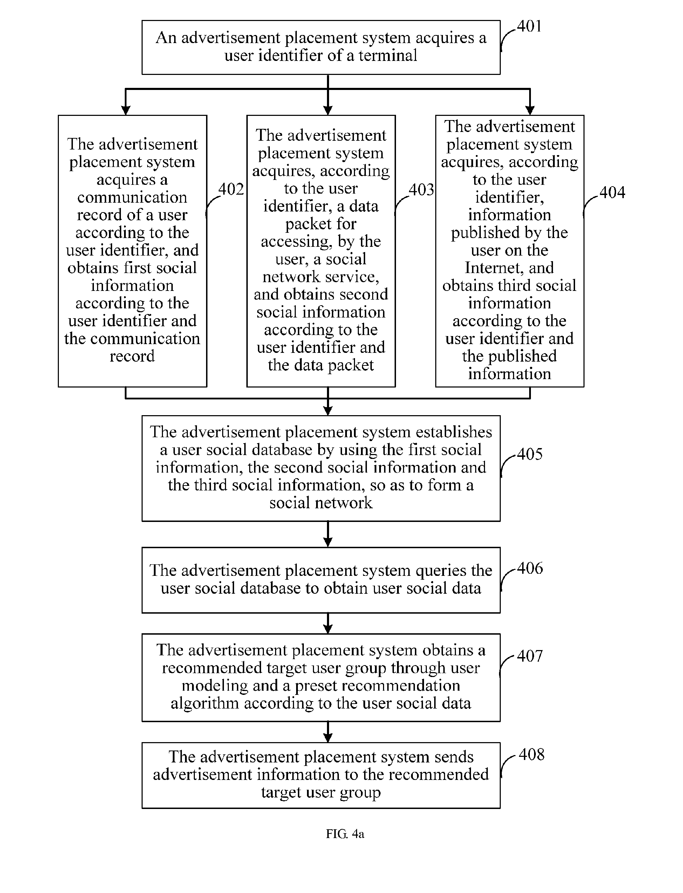

The data mining apparatus for a social network of a terminal user may be specifically integrated in an advertisement placement system, and may also be independent of the advertisement placement system, and then provided for invocation by the advertisement placement system through an API or a database query interface. Description is to be given below by taking an example that the data mining apparatus for a social network of a terminal user is integrated in the advertisement placement system. Referring to FIG. 4a, the specific process may be as follows:
401: An advertisement placement system acquires a user identifier of a terminal, where the terminal may be specifically a terminal device that can intervene in an operator network, such as a cell phone, a tablet computer, or a notebook computer, and the user identifier may be specifically an identifier that can identify the identity of a user, such as a cell phone number, a wireless service number using a 3G Internet access card or a fixed number of fixed broadband.
402: The advertisement placement system acquires a communication record of a user according to the user identifier acquired in step 401, and obtains first social information according to the user identifier and the communication record, where the first social information at least includes the user identifier and first contact information that are in an association relationship.
403: The advertisement placement system acquires, according to the user identifier acquired in step 401, a data packet for accessing, by the user, a social network service, and obtains second social information according to the user identifier and the data packet, where the second social information at least includes the user identifier and a first user account of the SNS application and/or second contact information that are in an association relationship.
404: The advertisement placement system acquires, according to the user identifier acquired in step 401 or the first user account obtained in step 403, information published by the user on the Internet, and obtains third social information according to the user identifier and the published information, where the third social information at least includes the user identifier and a second user account used by the user when publishing the information on the Internet and/or third contact information that are in an association relationship.
405: The advertisement placement system establishes or updates a user social database by using the first social information, the second social information and the third social information.
406: The advertisement placement system queries the user social database by using a user identifier of a terminal requesting a social network service as a query condition, so as to obtain user social data, for example, may specifically invoke the user social database through an API or a database query interface to acquire the user social data.
407: The advertisement placement system obtains a recommended target user group through user modeling and a preset recommendation algorithm according to the user social data acquired in step 406, where the recommended target user group may include one user and may also include multiple users.
408: The advertisement placement system sends advertisement information to the recommended target user group obtained in step 407.

Reference may be made to the foregoing embodiments about establishment of the social network for specific implementation of steps 401 to 405, which is not repeated here.

In view of the above, according to this embodiment, a user's behaviors of using a terminal and various social network services may be analyzed to self-establish a social network with rich scenarios and comprehensive information, then a user is analyzed based on the social network to obtain a recommended target user group, and an advertisement is placed for the recommended target user group. Users in the social network database have real identities, and the relationship between the users is not limited to the relationship in just one social network service application, but rather a combination of multiple social network service applications as well as a combination of terminal relationships of the users, so the precision and the effectiveness of advertisement placement are greatly improved.

### Embodiment 5

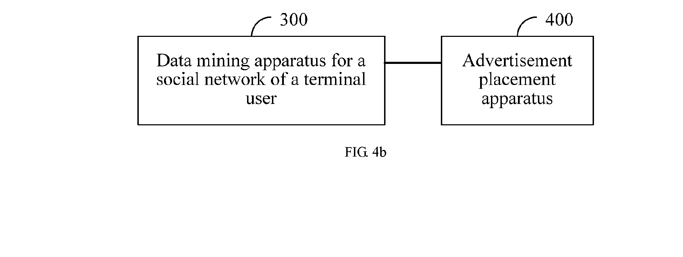

Corresponding to the advertisement placement method provided in Embodiment 4, the embodiment of the present invention further provides an advertisement placement system. As shown in FIG. 4b, the advertisement placement system includes an advertisement placement apparatus 400 and any data mining apparatus 300 for a social network of a terminal user provided in the embodiment of the present invention.

The data mining apparatus 300 for a social network of a terminal user may include a user identifier acquisition unit 301, a first processing unit 302, a second processing unit 303, a third processing unit 304 and a management unit 305. Reference may be made to Embodiment 3 for details, which, for example, may be as follows:

The user identifier acquisition unit 301 is configured to acquire a user identifier of a terminal, where the terminal may be specifically a terminal device that can intervene in an operator network, such as a cell phone, a tablet computer, or a notebook computer, and the user identifier may be specifically an identifier that can identify the identity of a user, such as a cell phone number, a wireless service number using a 3G Internet access card or a fixed number of fixed broadband.

The first processing unit 302 is configured to acquire a communication record of a user according to the user identifier, and obtain first social information according to the user identifier and the communication record, where the first social information at least includes the user identifier and first contact information that are in an association relationship.

The second processing unit 303 is configured to acquire, according to the user identifier, a data packet for accessing, by the user, a social network service, and obtain second social information according to the user identifier and the data packet, where the second social information at least includes the user identifier and a first user account of the SNS application and/or second contact information that are in an association relationship.

The third processing unit 304 is configured to acquire, according to the user identifier or the first user account, information published by the user on the Internet, and obtain third social information according to the user identifier and the published information, where the third social information at least includes the user identifier and a second user account used by the user when publishing the information on the Internet and/or third contact information that are in an association relationship.

The management unit 305 is configured to establish or update a user social database by using the first social information, the second social information and the third social information.

The advertisement placement apparatus 400 is configured to query the user social database by using a user identifier of a terminal requesting a social network service as a query condition, so as to obtain user social data; obtain a recommended target user group through user modeling and a preset recommendation algorithm according to the acquired user social data; and send advertisement information to the recommended target user group.

In view of the above, in the advertisement placement system of this embodiment, the data mining apparatus 300 for a social network of a terminal user may analyze a user's usage behaviors for a terminal and various social network services to self-establish a social network database with rich scenarios and comprehensive information, and then the advertisement placement apparatus 400 analyzes a user based on the social network database to obtain a recommended target user group, and places an advertisement for the recommended target user group. Users in the social network database have real identities, and the relationship between the users is not limited to the relationship in just one social network service application, but rather a combination of multiple social network service applications as well as a combination of terminal relationships of the users, so the precision and the effectiveness of advertisement placement are greatly improved.

### Embodiment 6

The "user social database" established in the embodiment of the present invention may be specifically applied to the scenario of security supervision. The details are as follows:

A security supervision method includes: acquiring a user identifier of a terminal; acquiring a communication record of a user according to the user identifier, and obtaining first social information according to the user identifier and the communication record, where the first social information includes the user identifier and first contact information that are in an association relationship; acquiring, according to the user identifier, a data packet for accessing, by the user, a social network service, and obtaining second social information according to the user identifier and the data packet, where the second social information includes the user identifier and a first user account of the SNS application and/or second contact information that are in an association relationship; acquiring, according to the user identifier or the first user account, information published by the user on the Internet, and obtaining third social information according to the user identifier and the published information, where the third social information includes the user identifier and a second user account used by the user when publishing the information on the Internet and/or third contact information that are in an association relationship; establishing or updating a user social database by using the first social information, the second social information and the third social information; querying the user social database by using a user identifier of a terminal requesting a social network service as a query condition, so as to obtain user social data; identifying the identity of a user according to the user social data, to obtain an identification result; and performing redirection processing or hierarchical flow control on an abnormal network behavior of the user by using the identification result.

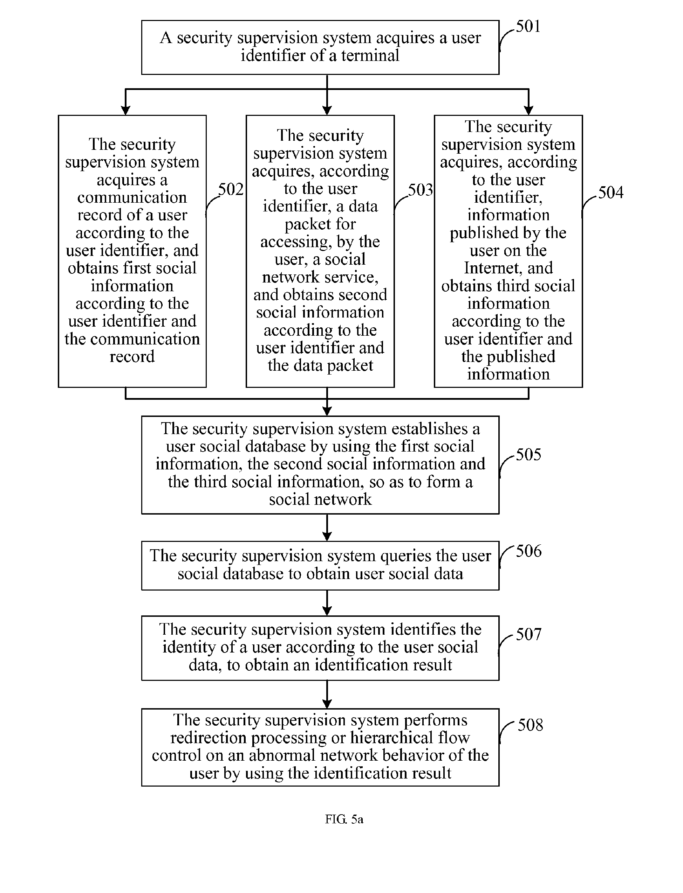

The data mining apparatus for a social network of a terminal user may be specifically integrated in a security supervision system, and may also be independent of the security supervision system, and then provided for invocation by the security supervision system through an API or a database query interface. Description is to be given below by taking an example that the data mining apparatus for a social network of a terminal user is integrated in the security supervision system. Referring to FIG. 5a, the specific process may be as follows:

501: A security supervision system acquires a user identifier of a terminal, where the terminal may be specifically a terminal device that can intervene in an operator network, such as a cell phone, a tablet computer, or a notebook computer, and the user identifier may be specifically an identifier that can identify the identity of a user, such as a cell phone number, a wireless service number using a 3G Internet access card or a fixed number of fixed broadband.

502: The security supervision system acquires a communication record of a user according to the user identifier acquired in step 401, and obtains first social information according to the user identifier and the communication record, where the first social information at least includes the user identifier and first contact information that are in an association relationship.

503: The security supervision system acquires, according to the user identifier acquired in step 401, a data packet for accessing, by the user, a social network service, and obtains second social information according to the user identifier and the data packet, where the second social information at least includes the user identifier and a first user account of the SNS application and/or second contact information that are in an association relationship.

504: The security supervision system acquires, according to the user identifier acquired in step 401 or the first user account obtained in step 503, information published by the user on the Internet, and obtains third social information according to the user identifier and the published information, where the third social information at least includes the user identifier and a second user account used by the user when publishing the information on the Internet and/or third contact information that are in an association relationship.

505: The security supervision system establishes or updates a user social database by using the first social information, the second social information and the third social information.

506: The security supervision system queries the user social database by using a user identifier of a terminal requesting a social network service as a query condition, so as to obtain user social data, for example, may specifically invoke the user social database through an API or a database query interface to acquire the user social data.

507: The security supervision system identifies the identity of a user according to the user social data, to obtain an identification result.

508: The security supervision system performs redirection processing or hierarchical flow control on an abnormal network behavior of the user by using the identification result.

For example, a network supervision device may identify the identity of a network user that has an abnormal behavior, to acquire his/her cell phone number and social relationship (identity certificate, hidden gang), thereby accurately locating the person that has the abnormal behavior.

Reference may be made to the foregoing embodiments for details of implementation of steps 501 to 505, which are not repeated here.

In view of the above, according to this embodiment, a user's behaviors of using a terminal and various social network services may be analyzed to self-establish a social network with rich scenarios and comprehensive information, then the identity of a user is identified based on the social network, to obtain an identification result, and redirection processing or hierarchical flow control is performed on an abnormal network behavior of the user by using the identification result. Users in the social network database have real identities, and the relationship between the users is not limited to the relationship in just one social network service application, but rather a combination of multiple social network service applications as well as a combination of terminal relationships of the users, so the effectiveness of network supervision is greatly improved.

### Embodiment 7

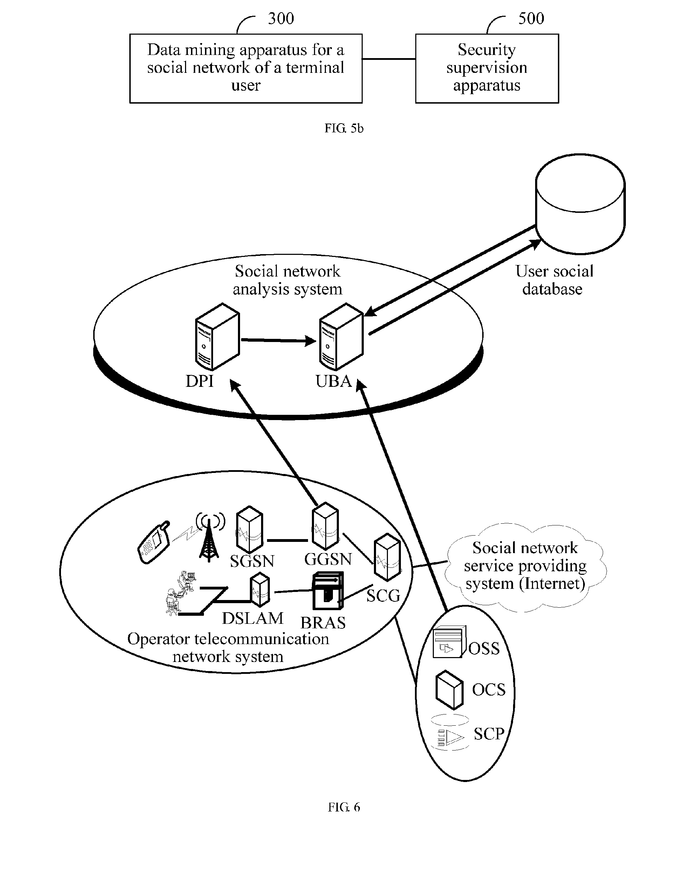

Corresponding to the security supervision method provided in Embodiment 6, the embodiment of the present invention further provides a security supervision system. As shown in FIG. 5b, the security supervision system includes a security supervision apparatus 500 and any data mining apparatus 300 for a social network of a terminal user provided in the embodiment of the present invention.

The data mining apparatus 300 for a social network of a terminal user may include a user identifier acquisition unit 301, a first processing unit 302, a second processing unit 303, a third processing unit 304 and a management unit 305. Reference may be made to Embodiment 3 for details, which, for example, may be as follows:

The user identifier acquisition unit 301 is configured to acquire a user identifier of a terminal, where the terminal may be specifically a terminal device that can intervene in an operator network, such as a cell phone, a tablet computer, or a notebook computer, and the user identifier may be specifically an identifier that can identify the identity of a user, such as a cell phone number, a wireless service number using a 3G Internet access card or a fixed number of fixed broadband.

The first processing unit 302 is configured to acquire a communication record of a user according to the user identifier, and obtain first social information according to the user identifier and the communication record, where the first social information at least includes the user identifier and first contact information that are in an association relationship.

The second processing unit 303 is configured to acquire, according to the user identifier, a data packet for accessing, by the user, a social network service, and obtain second social information according to the user identifier and the data packet, where the second social information at least includes the user identifier and a first user account of the SNS application and/or second contact information that are in an association relationship.

The third processing unit 304 is configured to acquire, according to the user identifier, information published by the user on the Internet, and obtain third social information according to the user identifier and the published information, where the third social information at least includes the user identifier and a second user account used by the user when publishing the information on the Internet and/or third contact information that are in an association relationship.

The management unit 305 is configured to establish or update a user social database by using the first social information, the second social information and the third social information.

The security supervision apparatus 500 is configured to query the user social database by using a user identifier of a terminal requesting a social network service as a query condition, so as to obtain user social data; identify the identity of a user according to the acquired user social data, to obtain an identification result; and perform redirection processing or hierarchical flow control on an abnormal network behavior of the user by using the identification result.

In view of the above, in the security supervision system of this embodiment, the data mining apparatus 300 for a social network of a terminal user may analyze a user's behaviors of using a terminal and various social network services to self-establish a social network with rich scenarios and comprehensive information, and then the security supervision apparatus 500 identifies the identity of a user based on the social network, to obtain an identification result, and performs redirection processing or hierarchical flow control on an abnormal network behavior of the user by using the identification result. Users in the social network database have real identities, and the relationship between the users is not limited to the relationship in just one social network service application, but rather a combination of multiple social network service applications as well as a combination of terminal relationships of the users, so the effectiveness of network supervision is greatly improved.

### Embodiment 8

Correspondingly, the embodiment of the present invention further provides a social network analysis system. As shown in FIG. 7, the social network analysis system includes a user identifier acquisition subsystem 701, a communication record analysis subsystem 702, an Internet access data analysis subsystem 703, an Internet social analysis subsystem 704, a user social database management subsystem 705 and a storage subsystem 706. The details are as follows:
(1) The user identifier acquisition subsystem 701 is configured to acquire a user identifier of a terminal.

The terminal may be specifically a terminal device that can intervene in an operator network, such as a cell phone, a tablet computer, or a notebook computer, and the user identifier may be specifically an identifier that can identify the identity of a user, such as a cell phone number, a wireless service number using a 3G Internet access card or a fixed number of fixed broadband.

(2) The communication record analysis subsystem 702 is configured to acquire a communication record of a user according to the user identifier, and obtain first social information according to the user identifier and the communication record, where the first social information includes the user identifier and first contact information that are in an association relationship.

(3) The Internet access data analysis subsystem 703 is configured to acquire, according to the user identifier, a data packet for accessing, by the user, a social network service, and obtain second social information according to the user identifier and the acquired data packet, where the second social information includes the user identifier and a first user account of the SNS application and/or second contact information that are in an association relationship

(4) The Internet social analysis subsystem 704 is configured to acquire, according to the user identifier or the first user account, information published by the user on the Internet, and obtain third social information according to the user identifier and the published information, where the third social information includes the user identifier and a second user account used by the user when publishing the information on the Internet and/or third contact information that are in an association relationship.

(5) The user social database management subsystem 705 is configured to establish or update a user social database by using the first social information, the second social information and the third social information that are obtained.

(6) The storage subsystem 706 is configured to store the user social database.

The communication record analysis subsystem 702 is specifically configured to acquire, from a charging system, the communication record of the user according to the user identifier; acquire the first contact information of the user according to the communication record; and associate the first contact information with the user identifier to obtain the first social information.

The Internet access data analysis subsystem 703 is specifically configured to acquire, from a GGSN or SCG or BRAS according to the user identifier, the data packet for accessing, by the user, the social network service; parse the data packet through deep packet inspection and/or user behavior analysis, to extract the first user account of a social network service application used by the user to access the social network service and/or the second contact information of the user; and associate the first user account and/or the second contact information with the user identifier to obtain the second social information.

The Internet social analysis subsystem 704 is specifically configured to acquire, according to the user identifier or the first user account, the information published by the user on the Internet; parse the published information through deep packet inspection and/or user behavior analysis, to extract the second user account used by the user when publishing the information on the Internet and/or the third contact information of the user; and associate the second user account and/or the third contact information with the user identifier to obtain the third social information.

During specific implementation, the foregoing subsystems may be implemented as independent entities, and may also be implemented as the same entity or several entities in any combination thereof.

For example, as shown in FIG. 6, the Internet access data analysis subsystem 70273 and the Internet social analysis subsystem 704 may be implemented through a DPI device, the user identifier acquisition subsystem 701, the communication record analysis subsystem 702 and the user social database management subsystem 705 may be implemented through a UBA device, and the storage subsystem 706 (that is, the user social database) may be any node having a storage function. For example, the storage subsystem 706 (that is, the user social database) may be built in the UBA device and may also be independent of the UBA device. The details may be as follows:

The UBA device is configured to acquire, from a network management system, a user identifier of a terminal, acquire a communication record of a user according to the user identifier, obtain first social information according to the user identifier and the communication record, receive second social information and third social information that are sent by the DPI device, and establish or update a user social database by using the first social information, the second social information and the third social information.

The DPI device is configured to acquire, according to the user identifier, a data packet for accessing, by the user, a social network service, obtain second social information according to the user identifier and the data packet, and provide the second social information for the UBA device; and acquire, according to the user identifier or the first user account, information published by the user on the Internet, obtain third social information according to the user identifier and the published information, and provide the third social information for the UBA device.

The network management system may be specifically a device such as an operation support system (OSS, Operation Support System), an online charging system (OCS, Online Charging System) or a service control point (SCP, Service Control Point). In addition, the operator telecommunication network system may also include other devices such as a gateway and a server, for example, with reference to FIG. 6.

Optionally, the user identifier acquisition subsystem 701, the communication record analysis subsystem 702, the Internet access data analysis subsystem 703, the Internet social analysis subsystem 704 and the user social database management subsystem 705 may be deployed in some network side devices by means of card insertion or software integration, for example, deployed in the same gateway device (for example, the SCG), or, deployed in different network side devices respectively, and so on. The network side devices may be specifically GGSN and/or SCG and/or BRAS devices. Specifically, in one implementation manner, the Internet access data analysis subsystem 703 and the Internet social analysis subsystem 704 are deployed in the GGSN, and the user identifier acquisition subsystem 701, the communication record analysis subsystem 702 and the user social database management subsystem 705 are deployed in the SCG.

Reference may be made to the foregoing embodiments for specific implementation of the social network analysis system, which is not repeated here.

In view of the above, the social network analysis system of this embodiment may acquire a user identifier of a terminal, then, in one aspect, acquire a communication record of a user by using the user identifier, and obtain first social information according to the user identifier and the communication record; in another aspect, acquire, according to the user identifier, a data packet for accessing, by the user, a social network service, and obtain second social information according to the user identifier and the data packet; in still another aspect, acquire, according to the user identifier, information published by the user on the Internet, and obtain third social information according to the user identifier and the published information; and finally, establish or update a user social database by using the first social information, the second social information and the third social information, so as to form a multifaceted social network. Compared with the prior art in which only a social network with a single scenario can be established based on an operator's own social network service data, the social network established according to this solution has richer scenarios and more comprehensive, detailed and precise content.

### Embodiment 9

Correspondingly, the embodiment of the present invention further provides a social network system. As shown in FIG. 8, the social network system includes an application service system 801 and any social network analysis system 802 provided in the embodiment of the present invention. Reference may be made to Embodiment 8 for details of the social network analysis system 802, which are not repeated here.

The application service system 801 is configured to provide a third-party social network service based on the user social database established or updated by the social network analysis system 802, where for example, the third-party social network service is specifically precision advertisement placement or network security supervision or the like, which may be as follows.

(1) The application service system 801 may specifically include a service control point, a behavior analysis system and an advertisement placement system.

The service control point is configured to query the user social database by using a user identifier of a terminal requesting a social network service as a query condition, so as to obtain user social data.

The behavior analysis system is configured to obtain a recommended target user group through user modeling and a preset recommendation algorithm according to the user social data acquired by the service control point, where the recommended target user group may include one user and may also include multiple users.

The advertisement placement system is configured to send advertisement information to the recommended target user group obtained by the behavior analysis system.

(2) The application service system 801 includes a service control point, a network supervision system and a policy server.

The service control point is configured to query the user social database by using a user identifier of a terminal requesting a social network service as a query condition, so as to obtain user social data.

The network supervision system is configured to identify the identity of a user according to a network supervision policy by using the user social data acquired by the service control point, to obtain an identification result; and perform redirection processing or hierarchical flow control on an abnormal network behavior of the user by using the identification result.

The policy server is configured to provide the network supervision policy to the network supervision system.

Reference may be made to the foregoing embodiments for specific implementation of the devices, which is not repeated here.

In view of the above, in the social network system of this embodiment, the application service system 801 may provide a third-party social network service based on the user social database established or updated by the social network analysis system 802, which, in addition to achieving the beneficial effects of the social network analysis system 802, can also improve the processing efficiency and quality of service of the third-party social network service, for example, improve the accuracy and effectiveness of advertisement placement, improve the effectiveness of network security supervision, and so on.

### Embodiment 10

A communication system is provided. As shown in FIG. 9, the communication system includes an operator telecommunication network system 901 and any social network system 902 provided in the embodiment of the present invention. Reference may be made to Embodiment 9 for specific implementation of the social network system, which is not repeated here.

The operator telecommunication network system 901 is configured to parse an Internet access record of a terminal to obtain a user identifier of the terminal, and provide the user identifier of the terminal and a communication record of a user to the social network system, for example, specifically provide the user identifier of the terminal and the communication record of the user for a user social analysis system in the social network system.

The operator telecommunication network system 901 may include a network management system (or a charging system), where the network management system may be specifically a device such as an OSS, an OCS or an SCP; in addition, the operator telecommunication network system may also include other devices such as a gateway and a server, for example, with reference to FIG. 6.

In addition, the communication system may also include a social network service providing system 903.

The social network service providing system 903 is configured to provide, for the social network system, a data packet for accessing a social network service and information published by the user on the Internet, for example, specifically provide, for the user social analysis system in the social network system, the data packet for accessing the social network service and the information published by the user on the Internet.

Reference may be made to the foregoing embodiments for specific implementation of the systems, which is not repeated here.

In view of the above, the communication system of this embodiment can achieve the same beneficial effects as those of the social network system provided in the embodiment of the present invention, which are not repeated here.

Persons skilled in the art may understand that all or part of the steps of the various methods in the foregoing embodiments may be implemented by a program instructing relevant hardware. The program may be stored in a computer readable storage medium. The storage medium may include: a read only memory (ROM, Read Only Memory), a random access memory (RAM, Random Access Memory), a magnetic disk, or an optical disk, and the like.

The data mining method for a social network of a terminal user and the related methods, apparatuses and systems provided in the embodiments of the present invention are described in detail above. The principle and implementation of the present invention are described here through specific examples. The description about the embodiments is merely provided for ease of understanding of the method and core ideas of the present invention. Persons skilled in the art may make variations and modifications to the present invention in terms of the specific implementations and application scopes according to the ideas of the present invention. Therefore, the specification shall not be construed as limitations to the present invention.

## Claims

1. A data mining method for a social network of a terminal user, the method comprising:
acquiring a user identifier of a terminal;
acquiring a communication record of a user according to the user identifier, and obtaining first social information according to the user identifier and the communication record, wherein the first social information comprises the user identifier and first contact information that are in an association relationship;
acquiring, according to the user identifier, a data packet for accessing, by the user, a social network service, and obtaining second social information according to the user identifier and the data packet, wherein the second social information comprises the user identifier and a first user account of a social network service application used by the user to access the social network service and/or second contact information that are in an association relationship;
acquiring, according to the user identifier or the first user account, information published by the user on the Internet, and obtaining third social information according to the user identifier and the published information or according to the first user account and the published information, wherein the third social information comprises the user identifier and a second user account used by the user when publishing the information on the Internet and/or third contact information that are in an association relationship; and
establishing or updating a user social database by using the first social information, the second social information and the third social information.

2. The method according to claim 1, wherein the acquiring the communication record of the user according to the user identifier, and obtaining the first social information according to the user identifier and the communication record comprises:
acquiring, from a charging system, the communication record of the user according to the user identifier;
acquiring the first contact information of the user according to the communication record; and
obtaining the first social information by associating the first contact information with the user identifier.

3. The method according to claim 1, wherein the acquiring, according to the user identifier, the data packet for accessing, by the user, the social network service, and obtaining the second social information according to the user identifier and the data packet comprises:
acquiring, from a gateway general packet radio service support node (GGSN) or a service control gateway (SCG) or a broadband remote access server (BRAS) according to the user identifier, the data packet for accessing, by the user, the social network service;
parsing the data packet through deep packet inspection and/or user behavior analysis, to extract the first user account of a social network service application used by the user to access the social network service and/or the second contact information of the user; and obtaining the second social information by associating the first user account and/or the second contact information with the user identifier.

4. The method according to claim 1, wherein the acquiring, according to the user identifier or the first user account, the information published by the user on the Internet, and obtaining the third social information according to the user identifier and the published information or according to the first user account and the published information comprises:
acquiring, according to the user identifier or the first user account, the information published by the user on the Internet;
parsing the published information through deep packet inspection and/or user behavior analysis, to extract the second user account used by the user when publishing the information on the Internet and/or the third contact information of the user; and
obtaining the third social information by associating the second user account and/or the third contact information with the user identifier.

5. The method according to any one of claims 2 to 4, wherein the establishing or updating the user social database by using the first social information, the second social information and the third social information comprises:
obtaining the user social database by integrating the first contact information comprised in the first social information, the first user account and/or the second contact information comprised in the second social information, and the second user account and/or the third contact information comprised in the third social information by using the user identifier as an index.

6. A data mining apparatus for a social network of a terminal user, the data mining apparatus comprising:
a user identifier acquisition unit, configured to acquire a user identifier of a terminal;
a first processing unit, configured to acquire a communication record of a user according to the user identifier, and obtain first social information according to the user identifier and the communication record, wherein the first social information comprises the user identifier and first contact information that are in an association relationship;
a second processing unit, configured to acquire, according to the user identifier, a data packet for accessing, by the user, a social network service, and obtain second social information according to the user identifier and the data packet, wherein the second social information comprises the user identifier and a first user account of a social network service application used by the user to access the social network service and/or second contact information that are in an association relationship;
a third processing unit, configured to acquire, according to the user identifier or the first user account, information published by the user on the Internet, and obtain third social information according to the user identifier and the published information, wherein the third social information comprises the user identifier and a second user account used by the user when publishing the information on the Internet and/or third contact information that are in an association relationship; and
a management unit, configured to establish or update a user social database by using the first social information, the second social information and the third social information.

7. The data mining apparatus for a social network of a terminal user according to claim 6, wherein the first processing unit comprises a first acquisition subunit and a first association subunit;
the first acquisition subunit is configured to acquire, from a charging system, the communication record of the user according to the user identifier, and acquire the first contact information of the user according to the communication record; and
the first association subunit is configured to obtain the first social information by associating the first contact information with the user identifier.

8. The data mining apparatus for a social network of a terminal user according to claim 6, wherein the second processing unit comprises a second acquisition subunit and a second association subunit;
the second acquisition subunit is configured to acquire, from a gateway general packet radio service support node (GGSN) or a service control gateway (SCG) or a broadband remote access server (BRAS) according to the user identifier, the data packet for accessing, by the user, the social network service; and parse the data packet through deep packet inspection and/or user behavior analysis, to extract the first user account of a social network service application used by the user to access the social network service and/or the second contact information of the user; and
the second association subunit is configured to obtain the second social information by associating the first user account and/or the second contact information with the user identifier.

9. The data mining apparatus for a social network of a terminal user according to claim 6, wherein the third processing unit comprises a third acquisition subunit and a third association subunit;
the third acquisition subunit is configured to acquire, according to the user identifier or the first user account, the information published by the user on the Internet; and parse the published information through deep packet inspection and/or user behavior analysis, to extract the second user account used by the user when publishing the information on the Internet and/or the third contact information of the user; and
the third association subunit is configured to obtain the third social information by associating the second user account and/or the third contact information with the user identifier.

10. The data mining apparatus for a social network of a terminal user according to any one of claims 7 to 9, wherein
the management unit is specifically configured to obtain the user social database by integrating the first contact information comprised in the first social information, the first user account and/or the second contact information comprised in the second social information, and the second user account and/or the third contact information comprised in the third social information by using the user identifier as an index.

11. An advertisement placement method, comprising:
acquiring a user identifier of a terminal;
acquiring a communication record of a user according to the user identifier, and obtaining first social information according to the user identifier and the communication record, wherein the first social information comprises the user identifier and first contact information that are in an association relationship;
acquiring, according to the user identifier, a data packet for accessing, by the user, a social network service, and obtaining second social information according to the user identifier and the data packet, wherein the second social information comprises the user identifier and a first user account of a social network service application used by the user to access the social network service and/or second contact information that are in an association relationship;
acquiring, according to the user identifier or the first user account, information published by the user on the Internet, and obtaining third social information according to the user identifier and the published information, wherein the third social information comprises the user identifier and a second user account used by the user when publishing the information on the Internet and/or third contact information that are in an association relationship;
establishing or updating a user social database by using the first social information, the second social information and the third social information;
obtaining user social data by querying the user social database, wherein a user identifier of a terminal requesting a social network service is used as a query condition;
obtaining a recommended target user group through user modeling and a preset recommendation algorithm according to the user social data; and
sending advertisement information to the recommended target user group.

12. An advertisement placement system, comprising an advertisement placement apparatus and the data mining apparatus for a social network of a terminal user according to any one of claims 6 to 10, wherein
the advertisement placement apparatus is configured to obtain user social data by querying a user social database wherein a user identifier of a terminal requesting a social network service is used as a query condition; obtain a recommended target user group through user modeling and a preset recommendation algorithm according to the user social data; and send advertisement information to the recommended target user group.

13. A security supervision method, comprising:
acquiring a user identifier of a terminal;
acquiring a communication record of a user according to the user identifier, and obtaining first social information according to the user identifier and the communication record, wherein the first social information comprises the user identifier and first contact information that are in an association relationship;
acquiring, according to the user identifier, a data packet for accessing, by the user, a social network service, and obtaining second social information according to the user identifier and the data packet, wherein the second social information comprises the user identifier and a first user account of a social network service application used by the user to access the social network service and/or second contact information that are in an association relationship;
acquiring, according to the user identifier or the first user account, information published by the user on the Internet, and obtaining third social information according to the user identifier and the published information, wherein the third social information comprises the user identifier and a second user account used by the user when publishing the information on the Internet and/or third contact information that are in an association relationship;
establishing or updating a user social database by using the first social information, the second social information and the third social information;
obtaining user social data by querying the user social database, wherein a user identifier of a terminal requesting a social network service is used as a query condition;
obtaining an identification result by identifying an identity of a user according to the user social data; and
performing redirection processing or hierarchical flow control on an abnormal network behavior of the user by using the identification result.

14. A security supervision system, comprising a security supervision apparatus and the data mining apparatus for a social network of a terminal user according to any one of claims 6 to 10, wherein
the security supervision apparatus is configured to obtain user social data by querying a user social database, wherein a user identifier of a terminal requesting a social network service is used as a query condition; obtain an identification result by identifying an identity of a user according to the user social data; and perform redirection processing or hierarchical flow control on an abnormal network behavior of the user by using the identification result.

15. A social network analysis system, comprising:
a user identifier acquisition subsystem, configured to acquire a user identifier of a terminal;
a communication record analysis subsystem, configured to acquire a communication record of a user according to the user identifier, and obtain first social information according to the user identifier and the communication record, wherein the first social information comprises the user identifier and first contact information that are in an association relationship;
an Internet access data analysis subsystem, configured to acquire, according to the user identifier, a data packet for accessing, by the user, a social network service, and obtain second social information according to the user identifier and the data packet, wherein the second social information comprises the user identifier and a first user account of a social network service application used by the user to access the social network service and/or second contact information that are in an association relationship;
an Internet social analysis subsystem, configured to acquire, according to the user identifier or the first user account, information published by the user on the Internet, and obtain third social information according to the user identifier and the published information, wherein the third social information comprises the user identifier and a second user account used by the user when publishing the information on the Internet and/or third contact information that are in an association relationship;
a user social database management subsystem, configured to establish or update a user social database by using the first social information, the second social information and the third social information; and
a storage subsystem, configured to store the user social database.

16. The social network analysis system according to claim 15, wherein
the communication record analysis subsystem is specifically configured to acquire, from a charging system, the communication record of the user according to the user identifier; acquire the first contact information of the user according to the communication record; and obtain the first social information by associating the first contact information with the user identifier;
the Internet access data analysis subsystem is specifically configured to acquire, from a gateway general packet radio service support node (GGSN) or a service control gateway (SCG) or a broadband remote access server (BRAS) according to the user identifier, the data packet for accessing, by the user, the social network service; parse the data packet through deep packet inspection and/or user behavior analysis, to extract the first user account of a social network service application used by the user to access the social network service and/or the second contact information of the user; and obtain the second social information by associating the first user account and/or the second contact information with the user identifier; and
the Internet social analysis subsystem is specifically configured to acquire, according to the user identifier or the first user account, the information published by the user on the Internet; parse the published information through deep packet inspection and/or user behavior analysis, to extract the second user account used by the user when publishing the information on the Internet and/or the third contact information of the user; and obtain the third social information by associating the second user account and/or the third contact information with the user identifier.

17. The social network analysis system according to claim 15 or 16, wherein
the user identifier acquisition subsystem, the communication record analysis subsystem, the Internet access data analysis subsystem, the Internet social analysis subsystem and the user social database management subsystem are integrated in the same gateway device; or
the user identifier acquisition subsystem, the communication record analysis subsystem, the Internet access data analysis subsystem, the Internet social analysis subsystem and the user social database management subsystem are respectively integrated in different gateway devices; and
the gateway device is specifically a gateway general packet radio service support node (GGSN) and/or a service control gateway (SCG) and/or a broadband remote access server (BRAS).

18. A social network system, comprising an application service system and the social network analysis system according to any one of claims 15 to 17, wherein
the application service system is configured to provide a third-party social network service based on the user social database.

19. The social network system according to claim 18, wherein the application service system comprises a service control point, a behavior analysis system and an advertisement placement system;
the service control point is configured to obtain user social data by querying the user social database, wherein a user identifier of a terminal requesting a social network service is used as a query condition;
the behavior analysis system is configured to obtain a recommended target user group through user modeling and a preset recommendation algorithm according to the user social data; and
the advertisement placement system is configured to send advertisement information to the recommended target user group.

20. The social network system according to claim 18, wherein the application service system comprises a service control point, a network supervision system and a policy server;
the service control point is configured to obtain user social data by querying the user social database, wherein a user identifier of a terminal requesting a social network service is used as a query condition;
the network supervision system is configured to identify an identity of a user according to a network supervision policy by using the user social data, to obtain an identification result; and perform redirection processing or hierarchical flow control on an abnormal network behavior of the user by using the identification result; and
the policy server is configured to provide the network supervision policy for the network supervision system.

21. A communication system, comprising an operator telecommunication network system, a social network service providing system and the social network system according to any one of claims 18 to 20, wherein
the operator telecommunication network system is configured to parse an Internet access record of a terminal to obtain a user identifier of the terminal, and provide the user identifier of the terminal and a communication record of a user for the social network system; and
the social network service providing system is configured to provide, for the social network system, a data packet for accessing a social network service and information published by the user on the Internet.
